**Europäisches Patentamt**

**European Patent Office**

**Office européen des brevets**

(19)

(11) Veröffentlichungsnummer: **0 278 514**
**A2**

(12) # EUROPÄISCHE PATENTANMELDUNG

(21) Anmeldenummer: **88102034.1**

(22) Anmeldetag: **11.02.88**

(51) Int. Cl.⁴: **H04N 7/173**

Die Bezeichnung der Erfindung wurde geändert (Richtlinien für die Prüfung im EPA, A-III, 7.3).

(30) Priorität: **12.02.87 DE 3704405**
**20.08.87 DE 3727865**
**20.08.87 DE 3727864**

(43) Veröffentlichungstag der Anmeldung:
**17.08.88 Patentblatt 88/33**

(84) Benannte Vertragsstaaten:
**AT BE CH DE ES FR GB GR IT LI LU NL SE**

(71) Anmelder: **Neuberger, Robert**
**Slevogtstrasse 3**
**D-8000 München 70(DE)**

(72) Erfinder: **Neuberger, Robert**
**Slevogtstrasse 3**
**D-8000 München 70(DE)**

(74) Vertreter: **Brehm, Hans-Peter, Dr., Dipl.-Chem.**
**et al**
**Patentanwälte Kern, Brehm & Partner**
**Albert-Rosshaupter-Strasse 73**
**D-8000 München 70(DE)**

(54) **Freigabedose für Teilnehmer eines Kabelkommunikationssystems.**

(57) Eine Freigabedose ist an einer, einem bestimmten Teilnehmer zugeordneten Standard-Antennensteckdose einer Antennenanlage anbringbar. Mit Hilfe dieser Freigabedose können unter der Steuerung von Freigabesignalen, die nach Maßgabe der Teilnehmer-Empfangsberechtigung in einer Zentraleinheit erzeugbar und in ein Koaxialkabel der Antennenanlage einspeisbar sind, ausgewählte Frequenzbereiche für den Empfang durch diesen Teilnehmer freigegeben oder gesperrt werden. Zur Freigabedose gehören wenigstens ein Frequenzfilter, das wenigstens einen ausgewählten Frequenzbereich zu sperren vermag, ferner wenigstens ine elektronische Schalteinrichtung zur Benutzung oder Umgehung dieses Filters, und weiterhin ein Signalgenerator, der Schaltsignale zur wahlweisen Betätigung der Schalteinrichtung und den aktuellen Zustand der Schalteinrichtung ausdrückende Rückmeldesignale erzeugt, die in das Koaxialkabel einspeisbar und der Zentraleinheit zuführbar sind. Um eine einfache, preiswerte, vor unberechtigten Manipulationen geschützte und leicht kontrollierbare Freigabedose bereitzustellen, mit welcher eine unmittelbare Kommunikation zwischen Zentraleinheit und Freigabedose bzw. Teilnehmer möglich ist, weist die Freigabedose zusätzlich einen einstellbaren, eine Adressierung jeder einzelnen Freigabedose ermöglichenden Kennungsgenerator auf, dessen Ausgang mit dem Signalgenerator und dessen Eingang wirksam mit einem Demodulator verknüpft ist, der an eine, die TV-Signale und die Freigabesignale führende Leitung angeschlossen ist. Weitere Ausführungsformen der Freigabedose können zusätzlich einen Störoszillator zur wahlweisen Belegung bestimmter TV-Kanäle mit einer Störfrequenz und/oder einen zusätzlichen Eingang für extern beim Teilnehmer erzeugte Signale aufweisen.

EP 0 278 514 A2

## Freigabedose

Die Erfindung betrifft eine Freigabedose, nämlich eine beim Teilnehmer installierbare Vorrichtung, um über ein Kabelkommunikationssystem berechtigte Teilnehmer mit ausgewählten Fernseh-Programmen zu versorgen.

In Verbindung mit dem Kabelfernsehen sollen auch sogen. Pay-TV-Programme (bezahltes Fernsehen) für die Abonnenten, nämlich die berechtigten Teilnehmer, gesendet und übermittelt werden. Es muß eine Auswahl zwischen berechtigten Teilnehmern, beispielsweise solchen, die eine vorgegebene Gebühr entrichtet haben, und unberechtigten Teilnehmern erfolgen, die vom Empfang dieser bestimmten Kosten-Fernseh-Programme ausgeschlossen sind. Weiterhin soll die Möglichkeit geschaffen werden, sämtliche Teilnehmer mit einem Teil der Fernseh-Programme zu versorgen und zusätzlich die berechtigten Teilnehmer mit weiteren, ausgewählten, insbesondere kostenpflichtigen Fernseh-Programmen zu versorgen.

Aus der U.S. Patentschrift 4,580,161 ist ein kontrollierbares Kabel-TV-System bekannt, über das eine Vielzahl von Teilnehmern versorgbar ist. Dieses bekannte System ordnet jedem Teilnehmer eine über eine Steckverbindung anschließbare Schaltungsplatte zu, welche von ihrer Funktion her der hier vorgesehenen Freigabedose entspricht. Diese bekannte Schaltungsplatte/Freigabedose ist an einer, einem bestimmten Teilnehmer zugeordneten Standard-Antennensteckdose einer Antennenanlage anbringbar, um unter der Steuerung von Freigabesignalen, die nach Maßgabe der Teilnehmer-Empfangsberechtigung in einer Zentraleinheit erzeugbar und in ein Koaxialkabel der Antennenanlage einspeisbar sind, ausgewählte Frequenzbereiche für den Empfang durch diesen Teilnehmer freizugeben oder zu sperren. Zu dieser Freigabedose gehört wenigstens ein Frequenzfilter, das wenigstens einen ausgewählten Frequenzbereich zu sperren vermag, weiterhin wenigstens eine elektronische Schalteinrichtung zur Benutzung oder Umgehung dieses Filters und ein Signalgenerator, der Schaltsignale zur wahlweisen Betätigung der Schalteinrichtung und den aktuellen Zustand der Schalteinrichtung ausdrückende Rückmeldesignale erzeugt, die in das Koaxialkabel einspeisbar und der Zentraleinheit zuführbar sind.

Jede Freigabedose ist an ein Terminal angeschlossen, das für die Teilnehmer nicht zugänglich ist und mehrere Teilnehmer bzw. Freigabedosen innerhalb eines Gebäudes versorgt. Jedes Terminal ist mit einem einstellbaren, eine Adressierung jedes Terminals ermöglichenden Kennungsgenerator ausgerüstet, der als Adresse eine bestimmte Bit-Folge liefert. Eine Adressierung jeder einzelnen, an ein bestimmtes Terminal angeschlossenen Freigabedose erfolgt über vorgegebene Steckverbindungen an diesem Terminal.

Das bekannte Kabel-TV-System ist in wenigstens drei Ebenen organisiert. Die Zentraleinheit kontrolliert Terminals, die wiederum Befehls-und Steuersignale für die den Teilnehmern zugeordneten Freigabedosen erzeugen. Eine unmittelbare Kommunikation oder Adressierung von der Zentraleinheit mit einem bestimmten Teilnehmer ist nicht möglich.

Auch das aus der U.S. Patentschrift 3,230,302 bekannte Verteil-und Zuordnungssystem für TV-Programme arbeitet in drei Ebenen. Bei jedem Teilnehmer befindet sich eine Wähl-und Umsetzer-Einrichtung, mit welcher die Wahl des gewünschten Programms vorgenommen wird und eine Umsetzung der modulierten Trägersignale in empfangbare Fernsehsignale erfolgt. Zusätzlich ist jede Wähl-und Umsetzer-Einrichtung mit einer eigenen Stromversorgung ausgerüstet. Jeweils eine Anzahl Wähl-und Umsetzer-Einrichtungen ist an eine für die Teilnehmer nicht zugängliche Sicherheitseinrichtung angeschlossen, die mit Schalteinrichtungen und Frequenzfiltern ausgerüstet ist. Die Schalteinrichtungen geben nach Maßgabe von in einer Zentraleinheit erzeugter Freigabesignale bestimmte Fernsehkanäle zum Empfang frei oder sperren diese. Zusätzliche "Meßeinrichtungen" in jeder Sicherheitseinrichtung erfassen, in welchem Umfang ein angeschlossener Teilnehmer bestimmte Kanäle benutzt und liefern entsprechende Rückmeldesignale an die Zentraleinheit.

Die deutsche Auslegeschrift 2 165 904 bezieht sich auf eine Anlage zur Mehrfachausnutzung von Signalleitungen in Gebäuden. Es ist beabsichtigt, die Signale und Steuerbefehle aus verschiedenen Quellen, wie etwa Klingelanlagen, Türöffner, Türsprechanlagen, Türfernsehanlagen, Wechselund Gegensprechanlagen, Gemeinschaftsantennenanlagen, Alarmanlagen, Datenübermittlungseinrichtungen, Rufanlagen, Ableseeinrichtungen über ein einziges Signalleitungssystem zu übertragen, das beispielsweise lediglich ein Koaxialkabel vorsieht.

Schließlich ist aus der deutschen Patentschrift 29 17 978 ein Kabelkommunikationssystem bekannt, bei dem zwischen einer Zentraleinheit und einer Anzahl Teilnehmerstationen eine frequenzmultiplexe und eine zeitmultiplexe Signalübertragung erfolgt. Jede Teilnehmerstation ist mit Signalgeber, Modulator, Demodulator, Kodierer, Dekodierer und mit einer Funktionsgebereinheit ausgerüstet. Die Funktionsgebereinheit weist einen Speicher auf und erzeugt Anforderungssignale

oder Bereitschaftssignale, welche über ein Koaxialkabel der Zentraleinheit zuführbar sind und dort ausgewertet werden. Zusätzlich können in den Teilnehmerstationen elektronisch gesteuerte Schalter angeordnet sein, welche von der Zentraleinheit gesteuert werden und den Empfang von Sonderprogrammen ermöglichen (Pay-TV). Weiterhin kann eine kontinuierliche Abfrage aller Teilnehmerstationen durch die Zentraleinheit vorgesehen sein. Das Fehlen eines ständig anstehenden Signals (z.B. digital) wird von der Zentraleinheit erkannt, angezeigt und registriert. Eine solche Abfrage dient zur Überprüfung der Betriebsbereitschaft der Teilnehmerstationen. Das bekannte System dient zur Kommunikation zwischen verschiedenen Teilnehmerstationen oder zwischen einer Teilnehmerstation und der Zentraleinheit und muß wegen der zeitmultiplexen Signalübertragung zwingend an jeder Teilnehmerstation die Erzeugung von Bereitschaftssignalen und einen Speicher vorsehen. Solche Einrichtungen fehlen bei der hier vorgesehenen Freigabedose.

Die Aufgabe der vorliegenden Erfindung besteht darin, das aus der U.S. Patentschrift 4,580,161 bekannte System zu vereinfachen und hierfür eine einfache, preiswerte, vor unberechtigten Manipulationen geschützte und leicht kontrollierbare Freigabedose bereitzustellen, mit welcher eine unmittelbare Kommunikation zwischen Zentraleinheit und Freigabedose bzw. Teilnehmer ermöglicht wird.

Ausgehend von einer Freigabedose, die an einer, einem bestimmten Teilnehmer zugeordneten Standard-Antennensteckdose einer Antennenanlage anbringbar ist, um unter der Steuerung von Freigabesignalen, die nach Maßgabe der Teilnehmer-Empfangsberechtigung in einer Zentraleinheit erzeugbar und in ein Koaxialkabel der Antennenanlage einspeisbar sind, ausgewählte Frequenzbereiche für den Empfang durch diesen Teilnehmer freizugeben oder zu sperren, mit wenigstens einem Frequenzfilter, das wenigstens einen ausgewählten Frequenzbereich zu sperren vermag, mit wenigstens einer elektronischen Schalteinrichtung zur Benutzung oder Umgehung dieses Filters und mit einem Signalgenerator, der Schaltsignale zur wahlweisen Betätigung der Schalteinrichtung und den aktuellen Zustand der Schalteinrichtung ausdrückende Rückmeldesignale erzeugt, die in das Koaxialkabel einspeisbar und der Zentraleinheit zuführbar sind, ist die erfindungsgemäße Lösung obiger Aufgabe dadurch gekennzeichnet, daß jede Freigabedose zusätzlich mit einem einstellbaren, eine Adressierung jeder einzelnen Freigabedose ermöglichenden Kennungsgenerator ausgerüstet ist, dessen Ausgang mit dem Signalgenerator und dessen Eingang wirksam mit einem Demodulator verknüpft ist, der an eine, die TV-Signale und die Freigabesignale führende Leitung angeschlossen ist.

Vorteilhafte Ausgestaltungen und Weiterbildungen der Erfindung ergeben sich aus den Unteransprüchen.

Vorzugsweise kann es sich beim einstellbaren Kennungsgenerator um einen Bit-Generator handeln, der eine bestimmte, entsprechend der Einstellung des Kennungsgenerators auswählbare Bit-Folge erzeugt. Nachdem die Freigabedose an der Standard-Antennensteckdose eines bestimmten Teilnehmers angebracht worden ist, und der Kennungsgenerator auf eine bestimmte Kennung, insbesondere eine bestimmte Bit-Folge eingestellt worden ist, definiert und charakterisiert diese Kennung bzw. Bit-Folge den Teilnehmer und erlaubt eine Adressierung durch die Zentraleinheit.

Zur Auswahl und Weiterverarbeitung des für die jeweilige Freigabedose bestimmten Freigabesignals ist ein Dekodierer vorgesehen, der mit dem Kennungsgenerator verknüpft ist. Als Dekodierer gut geeignet ist beispielsweise ein elektronischer Baustein in Form eines Chips mit einer integrierten Schaltung, die ein elektronisches Schieberegister und mit Transistoren bestückte Schaltkreise aufweist. Im Schieberegister wird die Adressierung eines Freigabesignals mit der vom Kennungsgenerator erzeugten Kennung, insbeson dere Bit-Folge verglichen, und bei Übereinstimmung erfolgt die Weiterverarbeitung des Befehls-oder Abfrageteils aus dem Freigabesignal.

Der Dekodierer ist dem Signalgenerator zugeordnet, der die entsprechenden Schaltsignale, Steuersignale und/oder Spannungsimpulse für das Rückmeldesignal erzeugt.

Jede Freigabedose erzeugt ein dem aktuellen Freigabezustand ausdrückendes Rückmeldesignal. Die Zentraleinheit identifiziert alle Rückmeldesignale, um jedes einzelne Rückmeldesignal einer bestimmten Freigabedose zuzuordnen. Hierzu kann jedes Rückmeldesignal eine Kennungskomponente enthalten, die mit der Kennung einer bestimmten Freigabedose übereinstimmt oder von dieser abgeleitet ist, so daß die Zentraleinheit ein Rückmeldesignal anhand dessen Kennungskomponente einer bestimmten Freigabedose zuordnen kann. Vorzugsweise ist jedoch eine periodische Abfrage aller Freigabedosen durch die Zentraleinheit vorgesehen, wobei zu einem gegebenen Zeitpunkt lediglich eine bestimmte Freigabedose abgefragt wird. Das unmittelbar anschließend an eine Abfrage bei der Zentraleinheit eingehende Rückmeldesignal wird automatisch der gerade abgefragten Freigabedose zugeordnet. Diese Ausführungsform ermöglicht eine einfache Ausgestaltung des Signalgenerators in der Freigabedose, weil zur Erzeugung der die unterschiedlichen Freigabezustände anzeigenden Rückmeldesignale einfache Spannungsimpulse ausreichen, die sich lediglich in ihrer Impulsdauer unterscheiden.

Beispielsweise kann der Signalgenerator als Rückmeldesignal bei durchgeschalteter Schalteinrichtung einen kurzen Spannungsimpuls und bei gesperrter Schalteinrichtung einen längeren Spannungsimpuls liefern. Typischerweise handelt es sich bei diesen Rückmeldesignalen um Signalfrequenzen im Frequenzbereich von 5 bis 30 MHz, die von einem dem Signalgenerator zugeordneten Oszillator erzeugt werden.

Die von den einzelnen Freigabedosen eingehenden Rückmeldesignale können in einem Speicher der Zentraleinheit gespeichert werden, so daß dort eine periodische Abfrage durch eine Bedienungsperson in längeren Zeitabständen ermöglicht wird.

In die. Freigabedose ist wenigstens ein Frequenzfilter und gegebenenfalls zusätzlich wenigstens ein Störoszillator integriert, um ausgewählte TV-Kanäle, Frequenzbänder und/oder Frequenzbereiche für den Empfang durch den Teilnehmer zu sperren. Mit einer Gemeinschaftsantennenanlage werden typischerweise nicht nur ausgewählte, insbesondere kostenpflichtige Fernseh-Programme empfangen und an den Teilnehmer weitergeleitet, sondern auch die üblichen, von den öffentlich-rechtlichen Anstalten ausgestrahlten Programme. Im Kabelnetz der deutschen Bundespost werden die kostenfreien, ortsüblichen Programme typischerweise im Frequenzbereich von 47 bis 68 MHz und im Frequenzbereich von 174 bis 202 MHz übertragen. Kostenpflichtige Kabelfernsehkanäle und dergleichen sind typischerweise im Frequenzbereich von 15 bis 174 MHz und im Frequenzbereich von 202 bis 440 MHz vorgesehen. Insbesondere im unteren Sonderbereich von 139 bis 174 MHz ist mit der Ausstrahlung von Satellitenprogrammen auf bestimmten, kostenpflichtigen TV-Kanälen zu rechnen. .

Vorzugsweise ist die erfindungsgemäße Freigabedose in jedem Falle zur ungehinderten Übertragung der Frequenzbereiche von 47 bis 68 MHz und von 174 bis 202 MHz ausgelegt. Vorzugsweise ist hierzu ein Frequenzfilter vorgesehen, das wenigstens für die Frequenzbereiche von 47 bis 68 MHz und von 174 bis 202 MHz einen Bandpaß bildet oder das alternativ für den gesamten Frequenzbereich von 40 bis 202 MHz einen Bandpaß bildet und das für den gesamten Frequenzbereich von 202 bis 450 MHz eine Bandsperre bildet. Entsprechend den Freigabesignalen der Zentraleinheit werden die TV-Signale über dieses Frequenzfilter geführt oder wird dieses Frequenzfilter umgangen. Auf diese Weise kann der Frequenzbereich von 202 bis 450 MHz für den Bild-und Tonempfang freigegeben oder gesperrt werden. Über den wahlweise vorgesehenen Störoszillator wird nach Maßgabe der Empfangsberechtigung entweder der gesamte Frequenzbereich von 125 bis 174 MHz oder innerhalb dieses Bereichs gezielt ein oder mehrere TV-Kanäle mit Störfrequenzen belegt und damit der Bild-und Tonempfang verhindert. Durch selektives Abschalten des Störoszillators wird der Bild-und Tonempfang auch in diesem Frequenzbereich ermöglicht. Damit können die ortsüblichen Regionalsendungen ungehindert empfangen werden, während der Empfang kostenpflichtiger Sendungen im oberen Sonderbereich und im erweiterten Sonderbereich entsprechend der Adressierung durch die Zentraleinheit wahlweise sperrbar ist.

Die Verarbeitung des Befehlsteils der Freigabesignale in dem dem Signalgenerator zugeordneten Dekodierer liefert Schaltsignale für die Schalteinrichtung und Steuersignale für den Störoszillator. Je nach Zustand der Schalteinrichtung werden die TV-Signale über das Frequenzfilter geführt oder umgeben dieses Frequenzfilter. Analog verursachen die Steuersignale ein Abschalten oder Zuschalten des Störoszillators. Bei Anwendung eines Störoszillators ist es zweckmäßig, zusätzlich einen Verstärker vorzusehen, welcher die vorwärts gerichteten TV-Signale verstärkt, beipielsweise um 3 bis 6 dB und die rückwärts gerichteten Störfrequenzen sperrt. Eine Ausbreitung der Störfrequenzen im Koaxialkabel und Beeinträchtigung anderer Freigabedosen kann so sicher verhindert werden.

Die bislang beschriebene Ausführungsform der Freigabedose erlaubt die Übermittlung adressierter Freigabesignale und Abfragesignale an eine bestimmte Freigabedose, die daraufhin eine Freischaltung oder Sperrung bestimmter Frequenzbereiche durchführt und den aktuellen Freigabezustand an die Zentraleinheit meldet. Jedoch ist eine unmittelbare Kommunikation zwischen Teilnehmer und Zentraleinheit über die Freigabedose und das Koaxialkabel nicht möglich. Aus organisatorischen Gründen muß der Teilnehmer im voraus eine Empfangsberechtigung für bestimmte, kostenpflichtige TV-Kanäle für einen vergleichsweise langen Zeitraum von beispielsweise wenigstens einem Monat erwerben.

Systeme mit einer direkten Freischaltung der kostenpflichtigen TV-Kanäle auf eine unmittelbar vorausgegangene Anforderung des Teilnehmers hin (sogen. "pay per view-Systeme") scheiterten bislang aus organisatorischen Gründen. Der Teilnehmer mußte zuerst telefonisch in der Zentrale das gewünschte Programm bestellen. Bei attraktiven Filmen war die Programmzentrale des Anbieters häufig total überlastet, und die Freischaltvorgänge bei den Teilnehmern erfolgten teilweise erst lange nach Beginn der gewünschten Sendung.

Durch einen zusätzlichen Eingang für extern erzeugte Signale kann die Freigabedose "pay per view-tauglich" gewählt werden. Der Empfänger kann durch Betätigung eines Zusatzgerätes die Freigabe einer unmittelbar bevorstehenden oder bereits laufenden, kostenpflichtigen TV-Sendung bei der Zentraleinheit anfordern. Die Zentraleinheit kann daraufhin - nach Prüfung der grundsätzlichen Empfangsberechtigung - ohne nennenswerte Verzögerung die Freischaltung der gewünschten Sendung für den bestimmten Teilnehmer veranlassen. Zu diesem Zweck weist eine bevorzugte Ausführungsform einer Freigabedose zusätzlich einen Eingang für extern erzeugte Signale auf, die über die mit einer entsprechenden Einspeiseweiche versehene Freigabedose in das Koaxialkabel einspeisbar und der Zentraleinheit zuführbar sind.

Bei den extern erzeugten Signalen kann es sich um BitFolgen handeln, die in einem Zusatzgerät bereitgestellt werden. Die Bit-Folgen dienen dazu, die unmittelbare Freischaltung bestimmter Frequenzbereiche oder TV-Kanäle an zufordern. Das Zusatzgerät kann einen Speicher für solche Bit-Folgen enthalten, die auf Tastendruck auslösbar sind. Alternativ können diese Bit-Folgen nach Bedarf im Zusatzgerät erzeugt werden in diesem Falle weist das Zusatzgerät zweckmäßigerweise einen mit einem kleinen Prozessor gekoppelten FSK-Generator auf. Es ist möglich, diese Bit-Folgen bereits im Zusatzgerät mit einer, für den jeweiligen Empfänger charakteristischen Kennung zu versehen. Das Zusatzgerät kann mit einem IR-Sensor versehen sein, um die Auslösung einer bestimmten Bit-Folge über die IR-Fernbedienung des Fernsehgeräts vorzunehmen.

Bei dem zusätzlichen Eingang an der Freigabedose kann es sich beispielsweise um die beiden Buchsen eines zweipoligen Steckers oder um eine Klinkenbuchse handeln. Von diesem Eingang führt eine Leitung zum Signalgenerator, der vorzugsweise mit einem Oszillator ausgerüstet ist, der eine Trägerfrequenz beispielsweise im Bereich von 5 bis 30 MHz erzeugt, auf welche die extern erzeugten Signale aufmoduliert werden. Diese Trägerfrequenz wird vom Signalgenerator aus über eine Rückführleitung und eine Einspeiseweiche innerhalb der Freigabedose in das Koaxialkabel eingespeist. Zusätzlich kann vorgesehen werden, innerhalb des Signalgenerators die extern erzeugten Signale zusätzlich mit der vom Kennungsgenerator erzeugten Kennung zu versehen. Vorzugsweise wird diese innerhalb der Freigabedose erzeugte Kennung der extern erzeugten Bit-Folge vorangestellt und das so gebildete Signal wird auf die "rückwärts gerichtete" Trägerfrequenz aufmoduliert. Auf diese Weise kann die Zentraleinheit über die Kennung der Freigabedose die Anforderung nach Freischaltung einem bestimmten Teilnehmer zuordnen und es ist nicht erforderlich, jedes Zusatzgerät mit einem einstellbaren Kennungsgenerator zu versehen.

Typischerweise erzeugt der Signalgenerator - auf bestimmte Freigabesignale der Zentraleinheit hin - entsprechende Schalt-und/oder Steuersignale, woraufhin entsprechende Freischaltungen vorgenommen werden. Nach einer weiteren vorteilhaften Ausgestaltung der Erfindung können auch die extern erzeugten Signale im Signalgenerator ein Schalt-und/oder Steuersignal auslösen, das eine sofortige, kurzfristige Freischaltung eines kostenpflichtigen, ansonsten für den Empfang gesperrten Frequenzbereichs oder TV-Kanals bewirkt. Diese sofortige "automatische" Freischaltung erfolgt nur für eine kurze Zeitspanne von beispielsweise 30 bis 200 sec. Innerhalb dieser kurzfristigen Freischaltung kann der Teilnehmer überprüfen, ob das gewünschte Programm tatsächlich in dem angeforderten Frequenzbereich gesendet wird. Weiterhin wird Zeit für gegebenenfalls erforderliche Schaltvorgänge zwischen einer als Nebenstelle ausgebildeten Zentraleinheit und deren Hauptzentrale geschaffen.

Zweckmäßigerweise kann die sofortige, kurzfristige, "automatische" Freischaltung mehrmals, beispielsweise zwei-oder dreimal, wiederholt werden. Jedoch ist in der Zentraleinheit eine Verzögerungsschaltung vorgesehen, welche nach mehrmaliger, negativ beschiedener Anfrage auf Freischaltung diese bestimmte Freigabedose für eine längere Zeitspanne, beispielsweise 60 min oder mehr, sperrt. Auf diese Weise wird verhindert, daß ein Teilnehmer durch beständig wiederholte Erzeugung externer Signale eine länge andauernde "automatische" Freischaltung des gewünschten TV-Kanals herbeiführen kann.

Die aktiven Bauelemente und Komponenten der Freigabedose benötigen Strom und/oder Spannung. Vorzugsweise kann eine zentrale Energieversorgung vorgesehen sein. Beispielsweise kann in das, die TV-Signale und die Freigabesignale führende Koaxialkabel Wechselstrom eingespeist werden und an jeder Standard-Antennensteckdose ist eine Stromumgehung vorgesehen. Innerhalb jeder Freigabedose befindet sich zusätzlich ein Stromversorgungteil, das wenigstens einen Transformator und einen Gleichrichter aufweist, um Gleichstrom zur Versorgung der aktiven Bauelemente bereitzustellen.

Alle für die Freigabedose benötigten elektronischen Bauteile, wie Kennungsgenerator, Demodulator, Dekodierer, Oszillator, elektronischer Schalter, Frequenzfilter mit Bandpaß und Bandsperren, Störoszillator und die Komponenten des Stromversorgungsteils sind bekannte, kleine, handelsüblich zugängliche Bauelemente, die vorzugsweise auf einer Platine befestigt werden und alle zusammen innerhalb des Gehäuses der Freigatedose unterbringbar sind. Praktische Ausführungsformen einer erfindungsgemäßen Freigabedose weisen lediglich eine Höhe von etwa 30 bis 50 mm auf und besitzen im Falle einer viereckigen Dose eine Kantenlänge von etwa 60 bis 90 mm bzw. im Falle einer runden Dose einen Durchmesser von etwa 60 bis 100 mm. Mit der Erfindung wird somit eine einfache, handliche Freigabedose bereitgestellt, die ohne weiteres an einer Standard-Antennensteckdose angebracht werden kann und die lediglich bekannte, handelsübliche elektronische Bauteile und Komponenten enthält. Damit schafft die vorliegende Erfindung eine preiswerte Möglichkeit , auch bei kleineren Teilnehmergruppen von beispielsweise bis zu 100, 200 oder bis zu 300 Teilnehmern, lediglich solche Teilnehmer mit ausgewählten, insbesondere kostenpflichtigen Fernseh-Programmen zu versorgen, für welche eine Empfangsberechtigung vorliegt.

Wie bereits gesagt, wird die erfindungsgemäße Freigabedose an einer Standard-Antennensteckdose angebracht. Dies kann mittels Spezialschrauben erfolgen und zur Verhinderung einer unberechtigten Entfernung der Freigabedose kann zusätzlich eine Plombe angebracht werden, die nach erfolgter Befestigung versiegelt wird. Die Standard-Antennensteckdose ist zweckmäßigerweise mit einer Stromversorgungs-Umgehung versehen, aus welcher die Freigabedose mit Strom versorgt wird. Bei der Anbringung der Frei gabedose an der Standard-Antennensteckdose wird eine wirksame Verbindung mit dem die TV-signale übertragenden Koaxialkabel hergestellt. Von der Freigabedose aus wird eine Verbindung zum Antenneneingang des Fernsehgeräts beim Empfänger vorgesehen. Hierzu kann die Freigabedose einen TV-Ausgang zum Aufstecken eines herkömmlichen Steckverbinders an der Antennenzuleitung zum Fernsehgerät aufweisen. Weiterhin kann sich an der Freigabedose ein Ausgang für die herkömmlichen Rundfunksignale befinden.

Ohne daß damit eine Beschränkung verbunden sein soll, wird die erfindungsgemäße Freigabedose nachstehend anhand bevorzugter Ausführungsformen mit Bezugnahme auf Zeichnungen mehr im einzelnen erläutert. Die Zeichnungen zeigen:

Fig. 1 schematisch eine Draufsicht auf eine Ausführungsform einer erfindungsgemäßen Freigabedose;

Fig. 2 eine Seitenansicht - teilweise im Schnitt der Freigabedose nach Fig. 1;

Fig. 3 anhand eines Blockdiagramms die wesentlichen Komponenten der Freigabedose 1 sowie die Verknüpfung dieser Komponenten;

Fig. 4 anhand eines Blockdiagramms im wesentlichen analog zu Fig. 3 eine weitere Ausführungsform der Freigabedose, die zusätzlich einen Störoszillator enthält; und

Fig. 5 anhand eines Blockdiagramms im wesentlichen analog zu Fig. 3 eine weitere Ausführungsform der Freigabedose, die zusätzlich einen Eingang für extern erzeugte Signale aufweist.

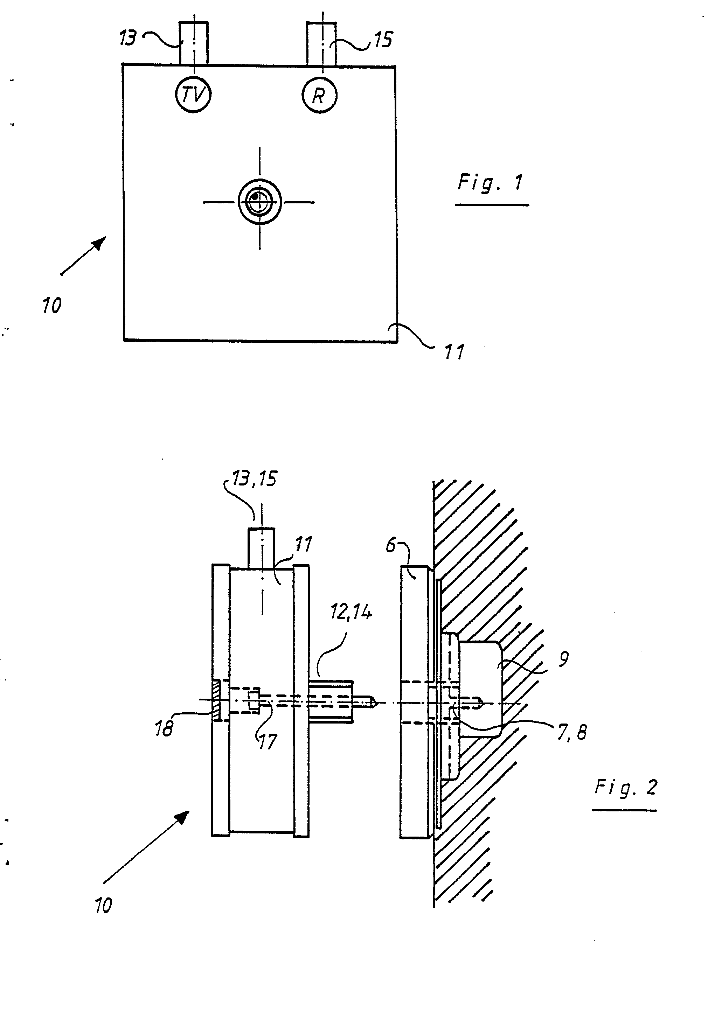

In Fig. 2 ist eine herkömmliche Standard-Antennensteckdose 9 zu erkennen, die teilweise in eine Mauer eingesetzt ist. Diese Standard-Antennensteckdose 9 weist einen typischen TV-Ausgang 8 und einen typischen Rundfunk-Aus gang 7 auf, auf welche typische Steckverbinder aufsteckbar sind. Eine Abdeckplatte 6 verschließt die Standar-Antennensteckdose 9.

An dieser Standard-Antennensteckdose 9 ist eine erfindungsgemäße Freigabedose 10 anbringbar, wie sie in den Fig. 1 und 2 dargestellt ist. Die Freigabedose 10 wird von einem Gehäuse 11 begrenzt, dessen Umfang an den Umfang der Abdeckplatte 6 der Standard-Antennensteckdose 9 angepaßt ist. Innerhalb des Gehäuses 11 befinden sich auf einer Platine die elektronischen Bauelemente der Freigabedose 10. Von der Rückwand des Gehäuses 11 stehen Steckverbinder ab, welche den TV-Eingang 12 und den Rundfunk-Eingang 14 der Freigabedose 10 bilden. Diese Steckverbinder 12,14 sind so ausgebildet und angeordnet, daß sie auf die entsprechenden Ausgänge 8,7 an der Standard-Antennensteckdose 9 aufsteckbar sind und danach eine fluchtende Anordnung der Freigabedose 10 mit der Abdeckplatte 6 der Standard-Antennensteckdose 9 erhalten wird. Zur dauerhaften Befestigung der Freigabedose 10 an der Standard-Antennensteckdose 9 dient eine (oder mehrere) durchgehende(n) Schraube(n) 17, die versenkt angebracht ist (sind). In der verbleibenden Vertiefung ist eine Plombe 18 anbringbar, die nach Anziehen der Schraube 17 versiegelt werden kann. Ohne Bruch der versiegelten Plombe 18 läßt sich die Freigabedose nicht öffnen und/oder von der Standard-Antennensteckdose 9 entfernen. Von der oberen Schmalseite der Freigabedose 10 stehen Anschlußbuchsen ab, welche den TV-Ausgang 13 und den Runfunk-Ausgang 15 der Freigabedose 10 bilden. Auf diese Anschlußbuchsen 13,15 können die üblichen Steckverbinder an der Antennenzuleitung bzw. an der Rundfunkzuleitung eines Fernsehgeräts aufgesteckt werden.

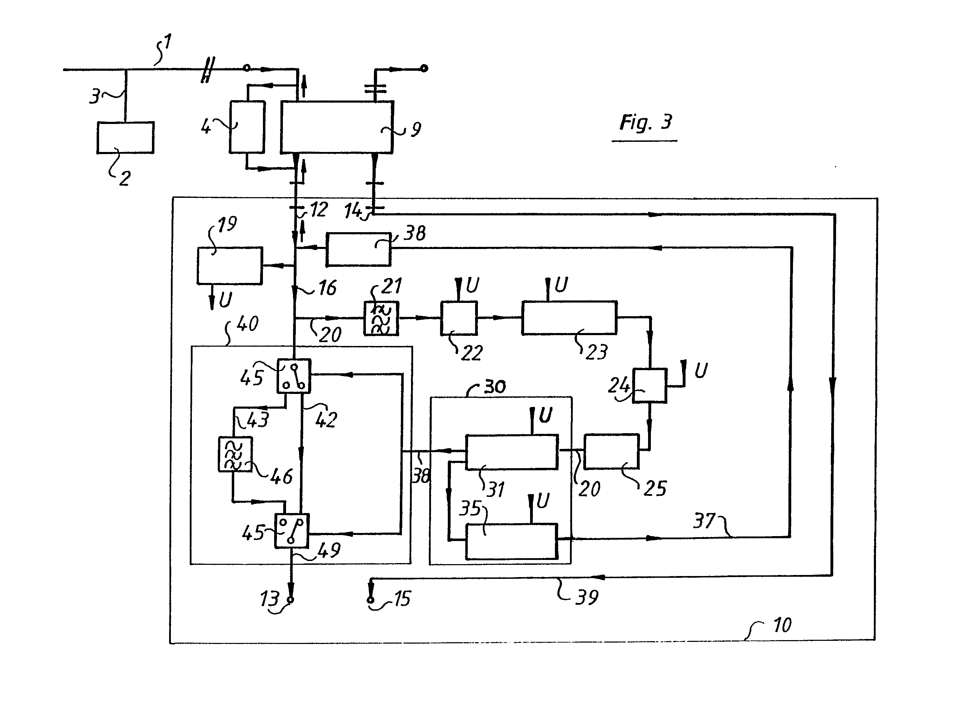

Das Gehäuse 11 der Antennensteckdose kann beispielsweise eine würfelförmige oder eine quaderförmige Gestalt aufweisen oder die Form einer runden flachen Dose haben. Vorzugsweise sind die Abmessungen des Gehäuses 11 an die Abmessungen einer Standard-Antennensteckdose 9 angepaßt. Wie aus Fig. 3 ersichtlich ist, ist ein Koaxialkabel 1 an eine - nicht dargestellte - Quelle für TV-Signale angeschlossen. Bei dieser Quelle kann es sich um eine Antenne einer Gemeinschaftsanlage zum Empfang der herkömmlichen Fernseh-Programme einschließlich Satelliten-Programme handeln, ferner um einen sogen. Übergabepunkt im Rahmen des Kabelfernsehens, weiterhin um einen Videorecorder oder um den Anschluß zu einem Fernsehstudio, mit dem im Rahmen eines Hotels, eines Krankenhauses oder dergleichen eigene Programme erzeugt werden. Das über das Koaxialkabel 1 geführte TV-Signal enthält auf einer für jeden Kanal typischen Trägerfrequenz sowohl Bild-und Tonträger.

Der in Fig. 3 dargestellte Leitungsabschnitt 1' führt in der Wohneinheit des Teilnehmers zu der dort vorgesehenen Standard-Antennensteckdose 9. Typischerweise sind an einer solchen Standard-Antennensteckdose 9 - nicht dargestellte - Ausgänge zum Anschließen der Steckverbinder für TV-und Rundfunk-Programme vorgesehen.

In das Koaxialkabel 1 sind zusätzlich zu den TV-Signalen die Freigabesignale einer Zentraleinheit 2 einspeisbar, welche über eine weitere Leitung 3 an das Koaxialkabel 1 angeschlossen ist. Je nach Größe der Anzahl der zu versorgenden Teilnehmer kann es sich bei der Zentraleinheit um eine einfache Datenverarbeitungsanlage, beispielsweise um einen Personal-Computer mit entsprechender Speicherkapazität handeln. Gut geeignet ist beispielsweise eine Kombination aus Personal-Computer und FSK-Generator. Es ist lediglich erforderlich, kontinuierlich oder periodisch ein Freigabesignal zu erzeugen und in das Koaxialkabel 1 einzuspeisen, das für jeden angeschlossenen Teilnehmer eine Adresse und Befehle zur Erzeugung eines Rückmeldesignals sowie gegebenenfalls Befehle zur Betätigung der Schalteinrichtung enthält. Beim Freigabesignal kann es sich beispielsweise um eine Freigabesignalfrequenz handeln, die auf eine beliebige Trägerfrequenz im Frequenzbereich von 40 bis 80 MHz aufmoduliert worden ist.

Weiterhin erfolgt über das Koaxialkabel 1 auch eine Stromversorgung der Freigabedose(n) 10. Über ein - nicht dargestelltes - Netzteil mit Transformator werden in das Kabel 1 beispielsweise 42 V Wechselstrom eingespeist. In das Kabel 1 vor und hinter jeder Standard-Antennensteckdose 9 eingesetzte - nicht dargestellte - Kondensatoren sorgen für Stromschutz. Eine Stromumgehung 4 an jeder Standard-Antennensteckdose 9 versorgt das Stromversorgungsteil 19 jeder Freigabedose 10 über eine Leitung 16 mit Strom. Aus dem Transformatoren und Gleichrichter aufweisenden Stromversorgungsteil 19 werden die einzelnen, aktiven Bauelemente der Freigabedose 10 mit dem benötigten Strom, beispielsweise mit 15 oder 24 Volt Gleichstrom versorgt, wie das im Blockdiagramm nach Fig. 3 jeweils schematisch mit dem Bezugszeichen "U" angedeutet ist.

Dem Blockdiagramm nach Fig. 3 lassen sich in schematischer Darstellung die wesentlichen Bauelemente einer erfindungsgemäßen Freigabedose 10 und deren Verknüpfung entnehmen. Vom TV-eingang 12 der Freigabedose 10 führt eine die TV-Signale führende Leitung 16 zum Eingang einer elektronischen Schalteinrichtung 45. Wie bereits oben dargelegt, wird über diese Leitung 16 auch das Stromversorgungsteil 19 mit Energie versorgt. Von dieser Leitung 16 zweigt eine Zweigleitung 20 ab, die - im wesentlichen in Reihenschaltung - die wesentlichen Komponenten der Freigabedose 10 miteinander verbindet. Zu diesen Komponenten gehören ein erstes Frequenzfilter 21, ein erster Verstärker 22, ein FM-Modulator 23, ein zweiter Verstärker 24, ein Kennungsgenerator 25, ein Signalgenerator 30 und eine Freigabeeinrichtung 40.

Das erste Frequenzfilter 21 läßt lediglich das von der Zentraleinheit 2 erzeugte Freigabesignal mit der auf einer Trägerfrequenz aufmodulierten Signalfrequenz passieren. Anschließend wird dieses Freigabesignal in einem ersten Verstärker 22 verstärkt. Daraufhin wird in einem Demodulator 23 die Signalfrequenz von ihrer entsprechenden Trägerfrequenz getrennt. An einem wahlweise vorgesehenen zwei ten Verstärker 24 kann gezielt die Signalfrequenz verstärkt werden. Diese Signalfrequenz enthält die Adressierung für einen bestimmten Teilnehmer entsprechend dessen Kennung und die Befehle zur aktuellen Empfangsberechtigung. Durch Verarbeitung dieser Signalfrequenz im Signalgenerator 30 wird ein Schaltsignal erzeugt, das über die Leitung 38 der Freigabeeinrichtung 40 zugeführt wird, um dort einen elektrischen Schalter 45 zu betätigen, mit dem nach Maßlo gabe der Empfangsberechtigung eine zweite, TV-Signale führende Zweigleitung 42 oder eine dritte, TV-Signale führende Zweigleitung 43 geschaltet wird, in welche eine Bandsperre für die ausgewählten, kostenpflichtigen Fernsehkanäle eingesetzt ist.

In einem Kennungsgenerator 25 wird ein für die jeweilige Freigabedose 10 und damit ein für einen bestimmten Teilnehmer charakteristisches Kennungssignal erzeugt. Vorzugsweise wird ein einstellbarer Kennungsgenerator 25 vorgesehen, um je nach Bedarf unterschiedliche Kennungssignale zu erzeugen. Typischerweise sollen mit dem Kennungsgenerator 25 eine größere Anzahl, vorzugsweise wenigstens 100 bis 300 verschiedene Kennungssignale erzeugbar sein. Als solche Kennungsgeneratoren 25 kommen beispielsweise adressierbare Schaltkreise mit abgestimmten Kondensatoren, Widerstände und Transistoren in Betracht. Vorzugsweise dient als Kennungsgenerator ein Bit-Generator 25. Ein bekannter, als Kennungsgenerator dienender Chip weist beispielsweise acht durchtrennbare Brücken auf. Zur Vornahme der Einstellung werden bestimmte Brücken durchtrennt, so daß an den hiervon festgelegten Stellen einer Bit-Folge eine "0" auftaucht. Die restlichen Brücken bleiben strom führend und liefern an den entsprechenden Stellen der Bit-Folge eine "1". So läßt sich an einer Freigabedose 10 einfach und - schnell eine Kennung entsprechend einer ganzstelligen Zahl von 1 bis 256 erzeugen. Das im Kennungsgenerator 25 erzeugte Kennungssignal wird über den Zweigleitungsabschnitt 20' dem Signalgenerator 30 zugeführt.

Zum Signalgenerator 30 gehört wenigstens ein Dekodierer 31, der aus dem über die Zweigleitung 20, 20' ankommenden Freigabesignal ein Schaltsignal zur Ansteuerung der elektronischen Schalteinrichtung 45 erzeugt. Aus einer Vielzahl aller, von der Zentraleinheit 2 für sämtliche Teilnehmer erzeugten Freigabesignale wählt der Dekodierer 31 dasjenige Freigabesignal aus, das für eine ausgewählte Freigabedose 10 bestimmt ist. Vorzugsweise erfolgt diese Auswahl durch einen Vergleich einer Kennungskomponente am Freigabesignal mit dem vom Kennungsgenerator 25 erzeugten Kennungssignal. Dieser Vergleich kann vorzugsweise mittels eines Schieberegisters erfolgen. Vorzugsweise ist der Dekodierer 31 mit Hilfe des Kennungsgenerators einstellbar, um lediglich solche Freigabesignale zu verarbeiten, deren Kennungskomponente mit der Kennung der bestimmten Freigabedose 10 übereinstimmt.

Zusätzlich zu den genannten Schaltsignalen erzeugt der Signalgenerator 30 ein die aktuelle Empfangsberechtigung ausdrückendes Rückmeldesignal für die Zentraleinheit 2.

Zweckmäßigerweise ist dem Dekodierer 31 ein Oszillator 35 zugeordnet, der eine Frequenz von ausgewählter Impulsdauer erzeugt, welche als Rückmeldesignal dient. Diese Frequenz kann beispielsweise im Frequenzbereich von etwa 5 bis 30 MHz liegen. Dieses Rückmeldesignal wird über eine Rückführleitung 37 einer Einspeiseweiche 38 zugeführt, mit welcher das Rückführsignal in die Leitung 16 und am TV-Eingang 12 der Freigabedose 10 schließlich in das Koaxialkabel 1 eingespeist wird, an welches über die Anschlußleitung 3 auch die Zentraleinheit 2 angeschlossen ist. Die Zentraleinheit ordnet jedes Rückmeldesignal derjenigen Freigabedose 10 zu, die gleichzeitig oder unmittelbar vorher mit einem Freigabesignal adressiert worden ist. Alternativ könnte jedes Rückmeldesignal mit einer vom Kennungsgenerator 25 erzeugten und für eine bestimmte Freigabedose 10 charakteristischen Kennungskomponente versehen sein. In jedem Fall kann an der Zentraleinheit 2 - unabhängig von einer Inspektion in der Wohneinheit des Empfängers - praktisch jederzeit die aktuelle Empfangsberechtigung jedes Empfängers und die Unversehrtheit der dort angebrachten Freigabedose überprüft werden. Hierzu kann die Zentraleinheit 2 fortlaufend nacheinander alle Freigabedosen 10 abfragen; im gewählten Falle wird jede einzelne der 256 Freigabedosen nach wenigen Millisekunden erneut abgefragt. Sämtliche Rückmeldesignale können in einem Speicher der Zentraleinheit 2 gespeichert werden, der periodisch ausgewertet wird. Sofern an einer bestimmten Freigabedose 10 eine Manipulation vorgenommen wird, erfolgt eine Unterbrechung des Rückmeldesignals. Diese Unterbrechung wird in der Zentraleinheit 2 gespeichert und registriert.

Die vom Dekodierer 31 erzeugten Schaltsignale werden über eine Verbindungsleitung 38 einer Freigabeeinrichtung 40 zugeführt. Zu den wesentlichen Bauteilen der Freigabeeinrichtung 40 gehören ein oder mehrere Frequenzfilter 46 und eine Schalteinrichtung 45, deren Eingang über die die TV-signale führende Leitung 16 mit dem TV-Eingang 12 der Freigabedose 10 verbunden ist. Wie aus Fig. 3 ersichtlich, stellt der Schalter 45 eine Verbindung zu zwei verschiedenen Zweigleitungen 42 und 43 her. Über die zweite Zweigleitung 42 sind sämtliche am TV-Eingang 12 der Freigabedose 10 ankommenden TV-Kanäle übertragbar, ohne daß bestimmte Frequenzbereiche herausgefiltert oder gesperrt werden. Diese Schalterstellung wird gewählt, wenn eine volle Empfangsberechtigung des Teilnehmers gegeben ist. In die dritte Zweigleitung 43 ist wenigstens ein Frequenzfilter 46 eingesetzt, das eine Bandsperre für einen bestimmten Frequenzbereich aufweist. Diese entsprechende Schalterstellung wird gewählt, wenn der ausgewählte Teilnehmer vom Empfang solcher TV-Kanäle ausgeschlossen ist, die in einem Frequenzbereich liegen, der von der Bandsperre gesperrt wird. Bei einem solchen sperrbaren Frequenzbereich kann es sich beispielsweise um den gesamten Frequenzbereich von 202 bis 450 MHz handeln.

Vom Ausgang des Schalters 45 führt eine weitere, TV-Signale führende Leitung 49 zum TV-Ausgang 13 der Freigabedose 10. Weiterhin ist innerhalb der Freigabedose 10 vorzugsweise eine die Rundfunksignale führende Leitung 39 vorgesehen, welche den Rundfunk-Eingang 14 der Freigabedose 10 mit deren Rundfunk-Ausgang 15 verbindet.

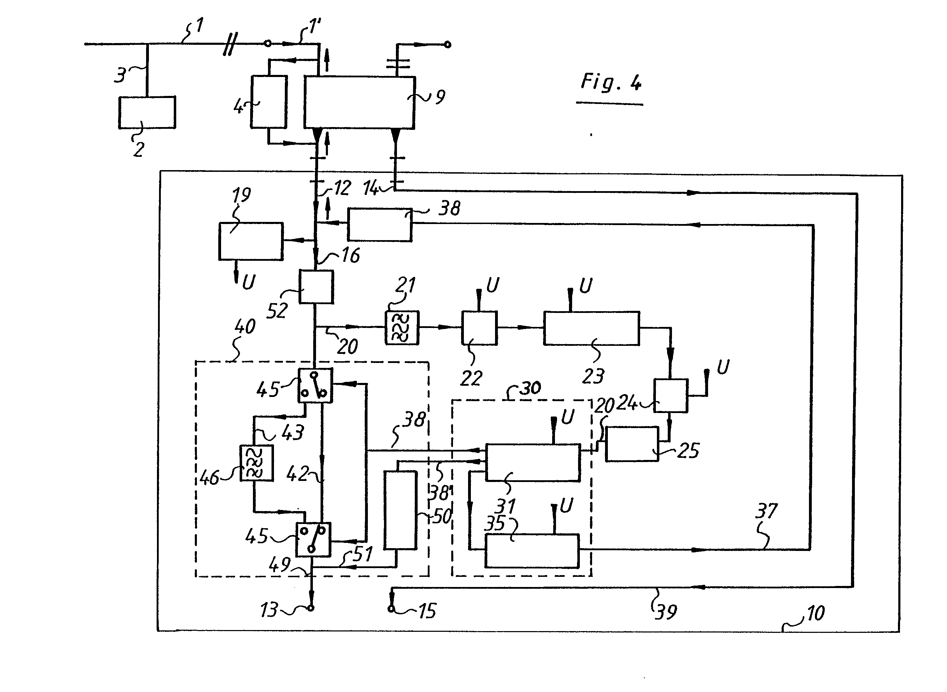

Die Fig. 4 zeigt eine im wesentlichen analog aufgebaute Freigabedose 10. Abweichend und zusätzlich zu der oben mit Bezugnahme auf Fig. 3 erläuterten Freigabedose 10 enthält die Freigabeeinrichtung 40 zusätzlich zu dem wenigstens einen Frequenzfilter 46 einen Störoszillator 50. Über eine zusätzliche Leitung 38' ist der Störoszillator 50 mit Steuersignalen versorgbar, die vom Signalgenerator 30 erzeugt werden. Die im Störoszillator 50 erzeugten Störfrequenzen werden über eine Leitung 51 in die zum TV-Ausgang 13 führende dritte, TV-Signale führende Leitung 49 eingespeist. Liegt auf der Leitung 38' kein Steuersignal an, so ist der Störoszillator in Betrieb (Normalzustand) und erzeugt Störfrequenzen im gesamten vorgesehenen Frequenzbereich, beispielsweise im Bereich zwischen 125 und 174 MHz. Auf ein erstes Steuersignal hin wird der Störoszillator 50 abgeschaltet, und der gesamte Frequenzbereich von 125 bis 174 MHz kann ungestört empfangen werden. Auf ein anderes, zweites Steuersignal hin er zeugt der Störoszillator lediglich Störfrequenzen innerhalb eines eng begrenzten Frequenzbandes und kann auf diese Weise gezielt einen oder mehrere TV-Kanäle im gesamten Frequenzbereich von beispielsweise 125 bis 174 MHz stören.

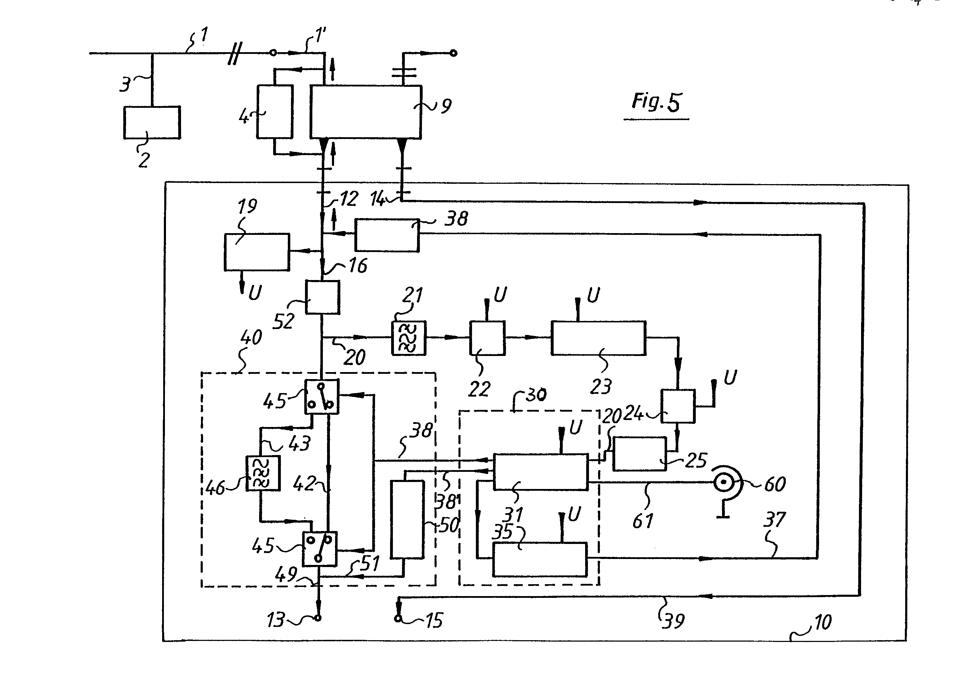

Mit dem Blockdiagramm nach Fig. 5 wird eine weitere Ausführungsform einer erfindungsgemäßen Freigabedose erläutert, die im wesentlichen analog zur Freigabedose nach Fig. 3 oder Fig. 4 aufgebaut ist, jedoch abweichend und zusätzlich einen zusätzlichen Eingang 60 für extern erzeugte Signale aufweist. Beispielsweise kann dieser zusätzliche Eingang 60 als Klinkenbuchse ausgebildet sein. Über eine Leitung 61 ist dieser zusätzliche Eingang 60 für extern erzeugte Signale an den Signalgenerator 30 angeschlossen. Der dem Signalgenerator 30 zugeordnete Oszillator 35 erzeugt eine Trägerfrequenz, auf welche die extern erzeugten Signale aufmodulierbar sind. Analog zu den Rückmeldesignalen können auch die auf die Trägerfrequenz aufmodulierten, extern erzeugten Signale über eine Rückführleitung 37 einer Einspeiseweiche zugeführt werden, mit welcher diese "rückwärts gerichteten" Signale in die Leitung 16 und am TV-Eingang 12 der Freigabedose 10 - schließlich in das Koaxialkabel eingespeist werden, an welche über die Anschlußleitung 3 auch die Zentraleinheit 2 angeschlossen ist. Es ist möglich, die extern erzeugten Signale zusätzlich mit der vom Kennungsgenerator 25 gelieferten Kennung oder einem davon abgeleiteten Kennungssignal zu versehen Weiterhin kann der Signalgenerator 30 auf extern erzeugte Signale hin Schaltsignale zur "automatischen" kurzfristigen Freischaltung erzeugen.

Über diese extern erzeugten Signale, die zweckmäßigerweise von einem Zusatzgerät beim Teilnehmer erzeugt werden, kann der Teilnehmer über die Freigabedose eine unmittelbare Aufforderung zur Freischaltung bestimmter TV-Kanäle an die Zentraleinheit richten (pay-TV per view).

**Ansprüche**

1. Eine Freigabedose (10), die an einer, einem bestimmten Teilnehmer zugeordneten Standard-Antennensteckdose (9) einer Antennenanlage anbringbar ist, um unter der Steuerung von Freigabesignalen, die nach Maßgabe der Teilnehmer-Empfangsberechtigung in einer Zentraleinheit (2) erzeugbar und in ein Koaxialkabel (1) der Antennenanlage einspeisbar sind, ausgewählte Frequenzbereiche für den Empfang durch diesen Teilnehmer freizugeben oder zu sperren, mit wenigstens einem Frequenzfilter (46), das wenigstens einen ausgewählten Frequenzbereich zu sperren vermag, mit wenigstens einer elektronischen Schalteinrichtung (45) zur Benutzung oder Umgehung dieses Filters, und mit einem Signalgenerator (30), der Schaltsignale zur wahlweisen Betätigung der Schalteinrichtung und den aktuellen Zustand der Schalteinrichtung ausdrückende Rückmeldesignale erzeugt, die in das Koaxialkabel einspeisbar und der Zentraleinheit zuführbar sind, dadurch gekennzeichnet, daß jede Freigabedose (10) zusätzlich mit einem einstellbaren, eine Adressierung jeder einzelnen Freigabedose ermöglichenden Kennungsgenerator (25) ausgerüstet ist, dessen Ausgang mit dem Signalgenerator (30) und dessen Eingang wirksam mit einem Demodulator (23) verknüpft ist, der an eine, die TV-Signale und die Freigabesignale führende Leitung (16) angeschlossen ist.

2. Die Freigabedose nach Anspruch 1, dadurch gekennzeichnet, daß der Kennungsgenerator ein Bit-Generator (25) ist, der eine bestimmte, entsprechend der Einstellung des Kennungsgenerators auswählbare Bit-Folge erzeugt.

3. Die Freigabedose nach Anspruch 1 oder 2, dadurch gekennzeichnet, daß der Signalgenerator (30) einen Oszillator (35) aufweist, der eine als Rückmeldesignal dienende Frequenz im Bereich von 5 bis 30 MHz liefert.

4. Die Freigabedose nach einem der Ansprüche 1 bis 3, dadurch gekennzeichnet, daß der Signalgenerator (30) als Rückmeldesignal bei durchgeschaltetem Schalter (45) einen kurzen Spannungsimpuls, und bei gesperrtem Schalter (45) einen längeren Spannungsimpuls liefert.

5. Die Freigabedose nach einem der Ansprüche 1 bis 4, dadurch gekennzeichnet, daß das vom Signalgenerator (30) gelieferte Rückmeldesignal zusätzlich das vom Kennungsgenerator (25) erzeugte Kennungssignal enthält.

6. Die Freigabedose nach einem der Ansprüche 1 bis 5,
dadurch gekennzeichnet, daß
das Frequenzfilter (46) einen Bandpaß für den Frequenzbereich von 40 bis 202 MHz und eine Bandsperre für den Frequenzbereich von 202 bis 450 MHz bildet.

7. Die Freigabedose nach einem der Ansprüche 1 bis 6,
dadurch gekennzeichnet, daß
zusätzlich zu dem Frequenzfilter (46) wenigstens ein Störoszillator (50) vorhanden ist, der Störfrequenzen im Bereich der TV-Signale erzeugt.

8. Die Freigabedose nach Anspruch 7,
dadurch gekennzeichnet, daß
der Störoszillator (50) den gesamten Frequenzbereich von 125 bis 174 MHz mit einer Störfrequenz belegt.

9. Die Freigabedose nach Anspruch 7,
dadurch gekennzeichnet, daß
der Störoszillator (50) innerhalb des Frequenzbereichs von 125 bis 174 MHz gezielt einen oder mehrere TV-Kanäle mit einer Störfrequenz belegt.

10. Die Freigabedose nach einem der Ansprüche 7 bis 9,
dadurch gekennzeichnet, daß
der Signalgenerator (30) nach Maßgabe der von der Zentraleinheit (2) gelieferten Freigabesignale Steuersignale zum Ab-oder Zuschalten des Störoszillators liefert.

11. Die Freigabedose nach einem der Ansprüche 7 bis 10,
dadurch gekennzeichnet, daß
zusätzlich ein Verstärker (52) vorhanden ist, welcher die vorwärts gerichteten TV-Signale verstärkt und die rückwärts gerichteten Störsignale sperrt.

12. Die Freigabedose nach einem der Ansprüche 1 bis 11,
dadurch gekennzeichnet, daß
die Freigabedose (10) zusätzlich einen Eingang (60) für extern erzeugte Signale aufweist, die in das Koaxialkabel (1) der Antennenanlage einspeisbar und der Zentraleinheit (2) zuführbar sind.

13. Die Freigabedose nach Anspruch 12,
dadurch gekennzeichnet, daß
der zusätzliche Eingang (60) über eine Leitung (61) mit dem Signalgenerator (30) verbunden ist; und der Signalgenerator (30) einen Oszillator (35) aufweist, der eine Trägerfrequenz erzeugt, auf welche die extern erzeugten Signale aufmodulierbar sind.

14. Die Freigabedose nach Anspruch 13,
dadurch gekennzeichnet, daß
die extern erzeugten Signale, vorzugsweise eine Bit-Folge, im Signalgenerator (30) mit einer Kennung versehen werden.

15. Die Freigabedose nach einem der Ansprüche 12 bis 14,
dadurch gekennzeichnet, daß
die extern erzeugten Signale im Signalgenerator (30) ein Freischaltungssignal auslösen, das eine sofortige, kurzfristige Freischaltung eines ansonsten für den Empfang gesperrten Frequenzbereichs bewirkt.

16. Die Freigabedose nach einem der Ansprüche 1 bis 15,
wobei in das, die TV-Signale und die Freigabesignale führende Koaxialkabel (1) Wechselstrom einspeisbar ist und eine Stromumgehung (4) an jeder Standard-Antennensteckdose (9) vorhanden ist,
dadurch gekennzeichnet, daß
die Stromumgehung (4) an die innerhalb der Freigabedose (10) befindliche Leitung (16) angeschlossen ist, die Freigabedose (10) zusätzlich ein Stromversorgungsteil (19) mit wenigstens einem Transformator und einem Gleichrichter aufweist, um Gleichstrom zur Versorgung der aktiven, innerhalb der Freigabedose (10) befindlichen Bauelemente bereitzustellen; und dieses Stromversorgungsteil (19) an die Leitung (16) angeschlossen ist.

17. Die Freigabedose nach einem der Ansprüche 1 bis 16,
dadurch gekennzeichnet, daß
die Freigabedose (10) einen TV-Ausgang (13) zum Aufstecken eines herkömmlichen Steckverbinders an der Antennenzuleitung zu einem Fernsehgerät aufweist.

0 278 514

*Fig. 1*

*Fig. 2*

Fig. 3

Fig. 4

0 278 514

Fig. 5